# EUROPÄISCHE PATENTSCHRIFT

(11) **EP 2 875 708 B1**
(45) Veröffentlichungstag und Bekanntmachung des Hinweises auf die Patenterteilung: **25.11.2020**
(21) Anmeldenummer: 14401106.1
(22) Anmeldetag: 31.10.2014
(51) Int. Cl.: A01B 76/00, A01B 79/00

(54) **BEDIENUNGSSYSTEM FÜR EINE LANDWIRTSCHAFTLICHE MASCHINE**
OPERATING SYSTEM FOR AGRICULTURAL MACHINES
SYSTÈME DE COMMANDE POUR UNE MACHINE AGRICOLE

(30) Priorität: 08.11.2013 DE 102013112294
(43) Veröffentlichungstag der Anmeldung: 27.05.2015
(73) Patentinhaber: Amazonen-Werke H. Dreyer GmbH & Co. KG, 49205 Hasbergen (DE)
(72) Erfinder: Kühn, Christoph, 49824 Ringe (DE)

(56) Entgegenhaltungen:
- EP-A1- 1 417 875
- EP-A2- 0 820 688
- DE-U1-202012 006 899

## Beschreibung

Die Erfindung betrifft ein Bedienungssystem für eine landwirtschaftliche Maschine gemäß des Oberbegriffes des Patentanspruches 1 sowie ein Verfahren gemäß Oberbegriff des Patentanspruchs 4.

Derartige Bedienungssysteme für eine landwirtschaftliche Maschine sind in der Praxis bekannt.

Zunehmend komplexer werdende Arbeitsmaschinen verfügen immer mehr über Automatik- und Bedienfunktionen, welche vor dem Arbeitsantritt durch den Bediener aktiviert werden müssen. Beispielsweise muss bei einer Pflanzenschutzspritze der Pumpenantrieb, die automatische Mengenregelung, die automatische Teilbreitenschaltung, die automatische Düsenauswahl, die automatische Rührdruckregelung, die automatische Lenkung, die automatische Höhenregelung der Federung, die automatische Gestängeführung etc. aktiviert werden.

Stand der Technik ist es, dass der Bediener jede dieser Funktion über ein entsprechendes Bedienelement im Terminal aktivieren bzw. den Zustand dieser Funktion in den Automatikmodus bringen muss. In der Praxis ist dieses häufig mit einem hohen Aufwand verbunden, da die einzelnen Funktionen in aller Regel auf unterschiedlichen Bedienebenen/ -seiten angeordnet sind. Zudem ist dieses Vorgehen sehr Fehlertolerant, da ggf. das Aktivieren einer Funktion vergessen werden kann.

Die DE 20 2012 006 899 U1 beschreibt eine landwirtschaftliche Maschine mit einem Steuergerät. Dieses Steuergerät umfasst unter anderem eine Bedientsaste, welche automatisch oder manuell mit verschiedenen Steuerfzunktionen belegt werden kann. Dabei wird mittels eines Software- und/oder Identifizierungsbausteins eine Landmaschinenkennung übertragen, anhand welcher die Tastenbelegung bestimmt wird.

Die EP 0 820 688 A2 beschreibt eine Vorrichtung zur Ansteuerung mindestens eines Stellorgans eines Arbeitsfahrzeugs. Weiter wird hier eine Automatiktaste beschrieben, welche mit verschiedenen Funktionen belegt werden kann. Diese werden dann beim Betätigen dieser Taste abgearbeitet.

Der Erfindung liegt die Aufgabe zugrunde, komplexe Bedienvorgänge vereinfacht durch die Betätigung von Tasten einleiten zu können.

Zur Lösung dieser Aufgabe ist erfindungsgemäß ein Bedienungssystem für eine landwirtschaftliche Maschine gemäß den kennzeichnenden Merkmalen des unabhängigen Anspruchs 1 sowie ein Verfahren gemäß den kennzeichnenden Merkmalen des unabhängigen Anspruchs 4 vorgesehen.

Wesentlicher Kern und Inhalt dieser Erfindung ist, dass der Bediener das Einschalten dieser Funktionen zusammenfassen kann. Hierzu kann der Bediener in einem Konfigurations- / Einstellungsmenu auswählen, welche der Funktionen der Arbeitsmaschine zusammen durch ein Bedienelement aktiviert werden sollen. Dies erleichtert die Bedienung der Maschine wesentlich.

Um in einfacher Weise alle zu betätigenden Elemente und/oder Aktoren der Maschine im Automatikmodus in gewollter und erforderlicher Weise zu betätigen ist vorgesehen, dass durch Betätigen der Gesamt-Auto-Taste die den ausgewählten Funktionen zugeordneten Betätigungselemente im programmierten Automatikmodus betätigt werden.

Um in einfacher Weise die richtige Funktion aktivieren zu können, ist vorgesehen, dass die Gesamt-Auto-Taste und/oder die dahinter liegende Betätigungslogik derart ausgelegt ist, dass durch betätigen der Gesamt-Auto-Taste die den ausgewählten Funktionen zugeordneten Betätigungselemente nur aktiviert und nicht deaktiviert werden.

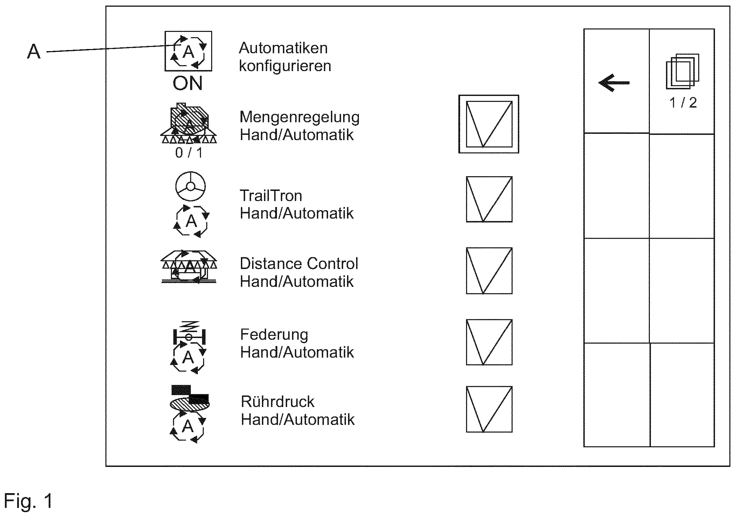

Weitere Einzelheiten der Erfindung sind der Beispielsbeschreibung zu entnehmen. Die Zeichnungen zeigen
- Fig.1: die Darstellung einer zu betätigender Tastelemente einer als Display ausgebildeten Anzeige- und/oder Bedieneinheit eines Bordrechners in vereinfachter Darstellung und

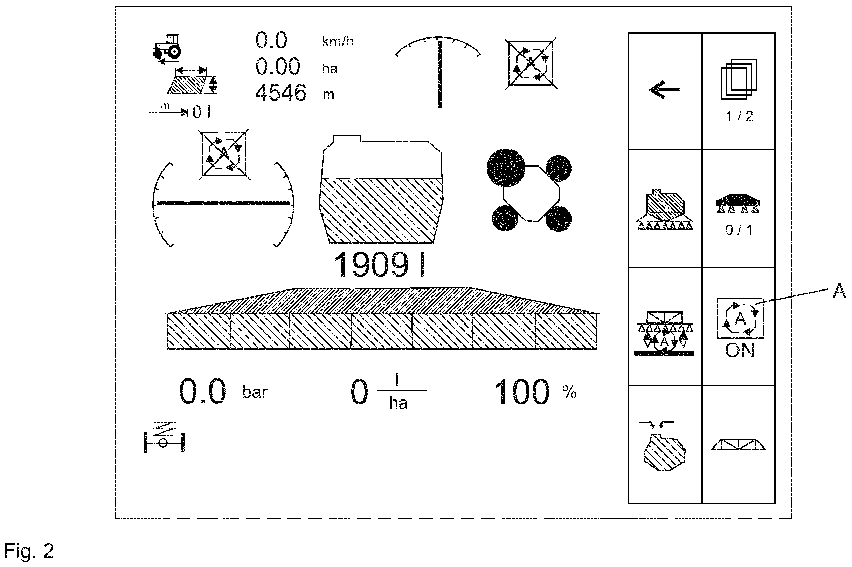

- Fig.2: eine weitere Darstellung auf dem Display, wobei hier die konfigurierte und über die Gesamt-Auto-Taste zu aktivierende und/oder aktivierte Gesamtfunktion dargestellt ist.

Betätigt der Bediener im Arbeitsmenu diese konfigurierte, als Gesamt-Auto-Taste bezeichnete Taste A, dann werden alle entsprechenden Funktionen aktiviert/ in den Automatikmodus gebracht, die entsprechend durch die Auswahl des Bedieners für diesen Automatikmodus aktiviert sind. Ist eine der ausgewählten Funktionen bereits vordem Betätigen dieses Bedienelements aktiviert/ in dem Automatikmodus, dann behält diese Funktion den aktuellen Zustand bei und durch das Betätigen dieser Taste werden lediglich alle verbleibenden Funktionen aktiviert. Ist bei der oben genannten Pflanzenschutzspritze beispielsweise der Pumpenantrieb sowie die automatische Mengenregelung aktiviert und alle anderen ausgewählten Funktionen noch deaktiviert, dann werden durch das Betätigen dieses Bedienelementes zusätzlich die automatische Teilbreitenschaltung, die automatische Düsenauswahl, automatische Rührdruckregelung, die automatische Lenkung, die automatische Höhenregelung der Federung sowie die automatische Gestängeführung aktiviert.

## Patentansprüche

1. Bedienungssystem für eine landwirtschaftliche Maschine mit einer Anzeige- und/oder Bedieneinheit einer Datenverarbeitungseinrichtung zur Steuerung und/oder Regelung verschiedener Funktionen der Maschine im Hand- und/oder Automatikmodus mit tastenartigen Bedienelementen zur Aktivierung einer Auswahl der verschiedenen Funktionen, **dadurch gekennzeichnet, dass** das Einschalten dieser Funktionen zusammenfassbar ist, wobei zumindest ein tastenartiges als Gesamt-Auto-Taste bezeichnetes Bedienelement vorhanden ist, dass dieses zur gleichzeitigen zusammengefassten Belegung mit den vom Bediener ausgewählten Funktionen frei konfigurierbar ist , wobei in einem Konfigurations- / Einstellungsmenü wählbar ist, welche der Funktionen der Arbeitsmaschine zusammen durch das Bedienelement aktivierbar sind.

2. Bedienungssystem nach Anspruch 1, **dadurch gekennzeichnet, dass** die Gesamt-Auto-Taste betätigbar ist, wodurch den ausgewählten Funktionen zugeordnete Betätigungselemente im programmierten Automatikmodus betätigt sind, wobei alle entsprechenden Funktionen aktiviert sind.

3. Bedienungssystem nach zumindest einem der vorstehenden Ansprüche, **dadurch gekennzeichnet, dass** die Gesamt-Auto-Taste und/oder die dahinter liegende Betätigungslogik derart ausgelegt ist, dass durch betätigen der Gesamt-Auto-Taste die den ausgewählten Funktionen zugeordneten Betätigungselemente nur aktiviert und nicht deaktiviert werden.

4. Verfahren zum Betreiben einer landwirtschaftlichen Maschine,
umfassend ein Bedienungssystem
mit einer Anzeige- und/oder Bedieneinheit einer Datenverarbeitungseinrichtung zur Steuerung und/oder Regelung verschiedener Funktionen der Maschine im Hand- und/oder Automatikmodus mit tastenartigen Bedienelementen zur Aktivierung einer Auswahl der verschiedenen Funktionen,
**dadurch gekennzeichnet, dass**
das Einschalten dieser Funktionen zusammengefasst ist,
wobei zumindest ein tastenartiges als Gesamt-Auto-Taste bezeichnetes Bedienelement zur gleichzeitigen zusammengefassten Belegung mit den vom Bediener ausgewählten Funktionen frei konfiguriert wird,
wobei in einem Konfigurations- / Einstellungsmenü wählbar ist, welche der Funktionen der Arbeitsmaschine zusammen durch das Bedienelement aktivierbar sind.

5. Verfahren nach Anspruch 4, **dadurch gekennzeichnet, dass** durch betätigen der Gesamt-Auto-Taste den ausgewählten Funktionen zugeordnete Betätigungselemente im programmierten Automatikmodus betätigt werden, wobei alle entsprechenden Funktionen aktiviert werden.

6. Verfahren nach Anspruch 4 oder 5, **dadurch gekennzeichnet, dass** durch betätigen der Gesamt-Auto-Taste die den ausgewählten Funktionen zugeordneten Betätigungselemente nur aktiviert und nicht deaktiviert werden.

## Claims

1. Operating system for an agricultural machine, having a display and/or operating unit of a data processing device for controlling and/or regulating various functions of the machine in the manual and/or automatic mode with button-like operating elements for activating a selection of the various functions, **characterized in that** the switching-on of these functions can be combined, wherein at least one button-like operating element referred to as a total auto button is present, **in that** this operating element can be freely configured for the simultaneous combined assignment of the functions selected by the operator, wherein it is possible to select in a configuration/settings menu which of the functions of the work machine can be activated together by the operating element.

2. Operating system according to Claim 1, **characterized in that** the total auto button can be actuated, as a result of which actuation elements assigned to the selected functions are actuated in the programmed automatic mode, wherein all corresponding functions are activated.

3. Operating system according to at least one of the preceding claims, **characterized in that** the total auto button and/or the actuation logic behind the button is/are designed in such a manner that the actuation elements assigned to the selected functions are only activated and are not deactivated by actuating the total auto button.

4. Method for operating an agricultural machine, comprising an operating system
having a display and/or operating unit of a data processing device for controlling and/or regulating various functions of the machine in the manual and/or automatic mode with button-like operating elements for activating a selection of the various functions,
**characterized in that**
the switching-on of these functions is combined, wherein at least one button-like operating element referred to as a total auto button is freely configured for the simultaneous combined assignment of the functions selected by the operator,
wherein it is possible to select in a configuration/settings menu which of the functions of the work machine can be activated together by the operating element.

5. Method according to Claim 4, **characterized in that** actuation elements assigned to the selected functions are actuated in the programmed automatic mode by actuating the total auto button, wherein all corresponding functions are activated.

6. Method according to Claim 4 or 5, **characterized in that** the actuation elements assigned to the selected functions are only activated and are not deactivated by actuating the total auto button.

## Revendications

1. Système de commande pour une machine agricole comprenant une unité d'affichage et/ou de commande d'un dispositif de traitement de données pour la commande et/ou la régulation de différentes fonctions de la machine en mode manuel et/ou automatique à l'aide d'éléments de commande de type touches pour activer une sélection des différentes fonctions, **caractérisé en ce que** le déclenchement desdites fonctions peut être combiné, dans lequel il est prévu au moins un élément de commande de type touche désigné touche automatique globale, **en ce que** celui-ci peut être librement configuré pour une affectation combinée simultanée avec les fonctions sélectionnées par l'opérateur, dans lequel, dans un menu de configuration/réglages, il est possible de sélectionner lesquelles des fonctions de la machine de travail peuvent être activées ensemble par l'élément de commande.

2. Système de commande selon la revendication 1, **caractérisé en ce que** la touche automatique globale peut être actionnée de telle sorte que des éléments d'actionnement associés aux fonctions sélectionnées soient actionnés dans le mode automatique programmé, toutes les fonctions correspondantes étant ainsi activées.

3. Système de commande selon au moins l'une des revendications précédentes, **caractérisé en ce que** la touche automatique globale et/ou la logique d'actionnement sous-jacente est conçue de telle sorte que les éléments d'actionnement associés aux fonctions sélectionnées soient uniquement activés et non désactivés par actionnement de la touche automatique globale.

4. Procédé de fonctionnement d'une machine agricole, comprenant un système de commande doté d'une unité d'affichage et/ou de commande d'un dispositif de traitement de données pour la commande et/ou la régulation de différentes fonctions de la machine en mode manuel et/ou automatique à l'aide d'éléments de commande de type touches pour activer une sélection des différentes fonctions,
**caractérisé en ce que**
le déclenchement desdites fonctions est combiné, dans lequel au moins un élément de commande de type touche, désigné touche automatique globale, est librement configuré pour une affectation combinée simultanée avec les fonctions sélectionnées par l'opérateur,
dans lequel, dans un menu de configuration/réglages, il est possible de sélectionner lesquelles des fonctions de la machine de travail peuvent être activées ensemble par l'élément de commande.

5. Procédé selon la revendication 4, caractérisé en ce des éléments d'actionnement associés aux fonctions sélectionnées sont actionnés dans le mode automatique programmé par actionnement de la touche automatique globale, toutes les fonctions correspondantes étant ainsi activées.

6. Procédé selon la revendication 4 ou 5, **caractérisé en ce que** les éléments d'actionnement associés aux fonctions sélectionnées sont uniquement activés et non désactivés par actionnement de la touche automatique globale.
